Europäisches Patentamt

European Patent Office

Office européen des brevets

(19)

(11) Publication number: **0 045 125**
**A1**

(12) # EUROPEAN PATENT APPLICATION

(21) Application number: **81302458.5**

(22) Date of filing: **03.06.81**

(51) Int. Cl.³: **H 02 K 3/34**, H 02 K 3/32

(30) Priority: **29.07.80 GB 8024724**

(43) Date of publication of application: **03.02.82**
**Bulletin 82/5**

(84) Designated Contracting States: **AT BE CH DE IT LI NL**

(71) Applicant: **GEC-XPELAIR LIMITED, P.O. Box 220 Deykin Avenue, Witton Birmingham, B6 7JH (GB)**

(72) Inventor: **Tranter, Robert John, 28 Heath Rise, Hollywood Birmingham B14 4TD (GB)**

(74) Representative: **Kirby, Harold Victor Albert, Central Patent Department The General Electric Company Limited Hirst Research Centre East Lane, Wembley Middlesex HA9 7PP (GB)**

(54) **Stators for electric motors.**

(57) A stator for an electric motor comprises a stator core (1) consisting of a stack of laminations (2) shaped to provide a plurality of poles (4.1) separated by intervening slots (5), and a pair of moulded plastics insulator elements (11, 12) each comprising an annular support (13) carrying a plurality of hollow projections (14) corresponding in number and cross-section to the said slots (5), the projections of the two elements fitting into the slots from opposite ends, and telescopically into one another to provide liners whose length can be modified to suit cores of different lengths.

COMPLETE DOCUMENT

This invention relates to stators for electric motors in which the stator core consists of a stack of laminations shaped to provide the required number of poles separated by intervening slots in which are wound coils of wire which provide the stator windings, the invention being especially applicable to salient pole electric motors. The coils of wire are usually insulated from the stator core by means of liners formed from strips of paper or like material of the appropriate length introduced into the respective slots before the winding on of the coils.

An object of the invention is to provide a stator having an alternative form of slot insulation which has advantages over the use of such conventional strip liners, as will be apparent from the following description.

According to the invention a stator for an electric motor comprises a stator core consisting of a stack of laminations shaped to provide a plurality of poles separated by intervening slots, and a pair of moulded plastics insulator elements each comprising an annular support carrying a plurality of hollow projections corresponding in number and cross-section to the said slots, the projections of the two elements fitting into the slots from opposite ends, with the supports abutting the respective ends of the stack and opposed projections engaging telescopically one within the other so as to provide insulating liners extending the length of the slots, adjoining projections at the outer end of each element being interconnected by a transverse web which extends across the face of the pole between the projections, such that the sides and end of each pole are surrounded by a casing of plastics material around which the respective coil is wound.

Such an arrangement has the advantage that it renders convenient the use of standard liner elements for cores utilising the same form of stator laminations, but having different axial lengths, by varying the amount by which the projections of the two elements are telescoped within one another. The elements are conveniently held in position on the stator by the coils when the latter have been wound on to the respective poles. The projections are conveniently formed with slots which align with the mouths of the slots between adjoining poles to permit the coils of wire providing the stator windings to be wound on to the poles utilising known winding techniques.

A further advantage of the invention is that the fitting of the elements is simplified compared with the insertion of separate insulating strips into the individual stator slots, and moreover since the sides and ends of the poles are surrounded by a casing of plastics material, the thickness of which can readily be controlled during the moulding process, the risk of insulation breakdown between the coils and the stator core is significantly reduced.

Conveniently all the projections of one of the elements are arranged to fit within corresponding projections of the other element, although in some cases some of the projections of one element may be arranged to fit within respective projections of the other element, with the remaining one or more projections of the latter arranged to fit within the corresponding projection of the first element.

The stator laminations are preferably secured together, as by welding or other known technique, to form a rigid stack before the fitting of the insulator elements.

The invention includes within its scope electric motors having stators with moulded plastic slot liners as above described.

One stator in accordance with the invention for use in a salient pole electric motor will now be described, by way of example, with reference to Figures 1 to 4 of the accompanying schematic drawing, in which

Figure 1 represents an end view of the stator core showing the shape of the stator laminations,

Figure 2 represents a perspective view of the stator,

Figure 3 shows the inner end of one of two plastics liner elements employed in the stator, and

Figure 4 represents a side view of the two elements prior to insertion into the stator core.

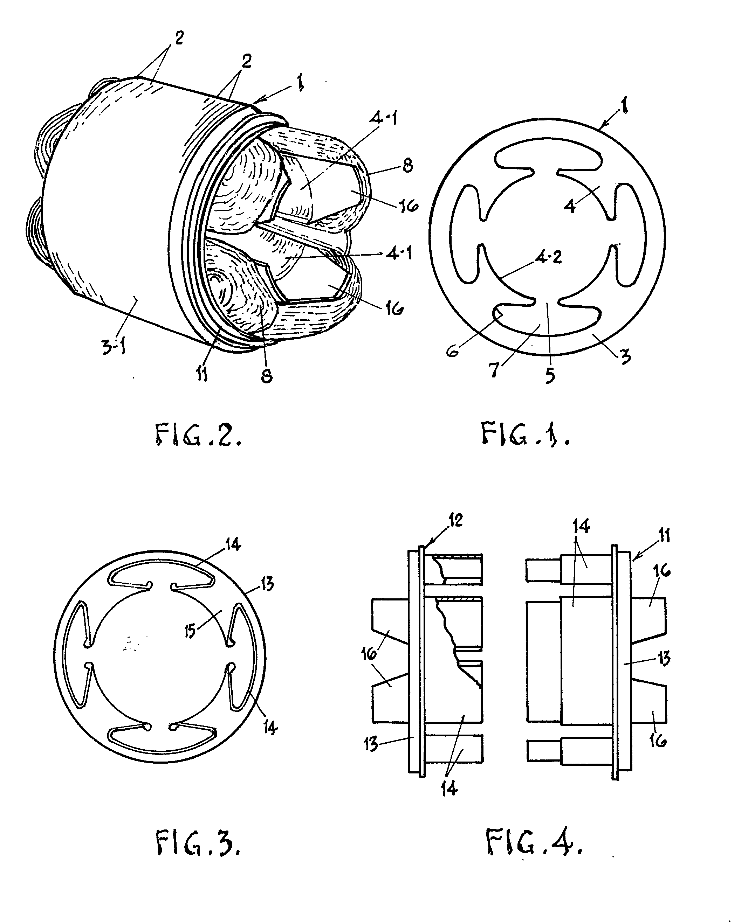

Referring first to Figures 1 and 2, the motor stator comprises a core 1 formed by a stack of similarly shaped steel laminations 2, each consisting of a ring 3 with inwardly directed projections 4, such that when the laminations are assembled to form a stack they provide a substantially cylindrical shell 3.1 carrying a plurality of poles 4.1, for example four as shown, the laminations being secured together as by welding or in any other convenient manner.

The inwardly facing surfaces 4.2 of the poles 4.1 provide a substantially cylindrical bore broken by slots 5 formed by the gaps between adjacent poles. The width of the poles is greatest adjacent the surfaces 4.2 and decreases towards the shell 3.1, the poles being joined to the shell by narrow necks 6. Accordingly the slots 5 have a relatively small transverse dimension between the pole surfaces 4.2 and open out into wider regions 7 as shown.

The poles 4.1 are wound, in known manner, with wire coils 8, which are insulated from the stator core, in accordance with the invention, by an insulator assembly comprising two separate elements 11, 12, the construction of which is shown more clearly in Figures 3 and 4. Each element is formed of moulded plastics material and comprises a supporting ring 13 carrying four projections 14 shaped so that they fit closely within the wider parts 7, of the slots 5, the projections being slid into the respective slots from opposite ends of the stack of laminations 2 before the winding on of the coils 8, the latter then serving to hold the elements in position. Adjacent projections 14 on each element are connected by generally flat webs 15 lying perpendicular to the axis of the element, and serving to insulate the coils 8 from the ends of the poles 4.1, flanges 16 which project axially outwards from the radially inner edges of the webs 15 supporting the ends of the coils 8 against radially inward movement.

The end parts of the projections 14 on one of the elements, for example 11, are of such dimensions that they are a telescopic fit within corresponding projections of the other element 12, such that the elements are capable of being used with different stator stacks of the same radial dimensions but different axial lengths.

Moreover as only two insulating elements need to be handled, the assembly of the stator is simplified compared with the manufacture of stators requiring separate slot liners of strip form for the individual slots.

## CLAIMS

1.      A stator for an electric motor comprising a stator core consisting of a stack of laminations shaped to provide a plurality of poles separated by intervening slots, and a pair of moulded plastics insulator elements each comprising an annular support carrying a plurality of hollow projections corresponding in number and cross-section to the said slots, the projections of the two elements fitting into the slots from opposite ends, with the supports abutting the respective ends of the stack and opposed projections engaging telescopically one within the other so as to provide insulating liners extending the length of the slots, adjoining projections at the outer end of each element being interconnected by a transverse web which extends across the face of the pole between the projections, such that the sides and end of each pole are surrounded by a casing of plastics material around which the respective coil is wound.

2.      A stator according to Claim 1 wherein the elements are held in position on the stator by the coils wound on the respective poles.

3.      A stator according to Claim 2 in which the projections are formed with slots in alignment with the mouths of the slots between adjoining poles.

4.      A stator according to any preceding Claim wherein the projections of one of the elements all fit within the projections of the other element.

5.      A stator according to any one of Claims 1 to 3 wherein some of the projections of one element fit within respective projections of the other element, with the remaining one or more projections of the other element fitting within corresponding projections of the first element.

6.      A stator according to any preceding Claim in which the stator laminations are secured together

0045125

to form a rigid stack independently of the elements.

7.      A stator according to Claim 6 wherein the stator laminations are secured together by welding.

8.      A stator for an electric motor substantially as shown in and as hereinbefore described with reference to Figures 1 to 4 of the accompanying drawing.

9.      An electric motor incorporating a stator according to any preceding Claim.

10.      An electric motor according to Claim 9 which is a salient pole electric motor.

FIG.2.

FIG.1.

FIG.3.

FIG.4.

## DOCUMENTS CONSIDERED TO BE RELEVANT

| Category | Citation of document with indication, where appropriate, of relevant passages | Relevant to claim |
|---|---|---|
| | EP - A - 0 006 514 (RAPIDSYN)<br>* Page 5, line 1 to page 6, line 10 * | 1-6, 8-10 |
| | DE - B - 1 056 251 (HEYD)<br>* Column 2, line 45 to column 3, line 10 * | 1-3, 6,9,10 |
| | US - A - 4 028 573 (S.E.I.M.)<br>* Column 2, line 43 to column 3, line 14 * | 1-3, 6,9,10 |
| | US - A - 3 161 796 (ANNIS et al.)<br>* Column 1, line 66 to column 2, line 2 * | 6,7 |
| A | US - A - 3 861 026 (SWAIM)<br>* Column 3, lines 18-25; column 3, line 47 to column 4, line 4 * | |

**CLASSIFICATION OF THE APPLICATION (Int. Cl.³)**

H 02 K 3/34
3/32

**TECHNICAL FIELDS SEARCHED (Int. Cl.³)**

H 02 K 3/32
3/34

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 3-09-1981 | |

BAD ORIGINAL